# EUROPÄISCHE PATENTANMELDUNG

(11) **EP 1 195 092 A1**
(43) Veröffentlichungstag der Anmeldung: **10.04.2002**
(21) Anmeldenummer: 00810912.6
(22) Anmeldetag: 04.10.2000
(51) Int. Cl.: A21D 8/02, A21D 2/36, A21D 10/00

(54) **Verfahren zur Herstellung von Getreideprodukten**

(71) Anmelder: AGRANO AG, CH-4123 Allschwil (CH)
(72) Erfinder: Ehret, Aloyse, 68730 Blotzheim (FR)
(74) Vertreter: Schwander, Kuno

(57) **Zusammenfassung**

Während es derzeit bei der Herstellung von Getreideprodukten, wie Gebäcke und Teigwaren, üblich ist, als Ausgangsmaterial Mehl zu verwenden, dass in irgendeinem an sich bekannten Verfahren durch Zerkleinerung von Getreidekörnern hergestellt wurde, schlägt die Erfindung vor, zur Teigherstellung kein herkömmliches Mehl zu verwenden, sondern direkt das Getreide, wozu die gereinigten und gegebenenfalls mindestens teilweise geschälten Getreidekörner zusammen mit Wasser in einem Kutter, auch Blitz genannt, zu Teig verarbeitet werden. Aus diesem Teig werden dann auf irgend einem der bekannten Wege die Gebäcke, beispielsweise ein Brot, oder die Teigwaren hergestellt. Dieses neue Verfahren hat den wesentlichen Vorteil, dass auf die Herstellung, die Lagerung und den Transport von Mehl verzichtet werden kann und dass bei der Produktherstellung ein Grossteil der Aromastoffe im Teig erhalten bleiben, was bei den herkömmlichen Verfahren nicht immer der Fall ist.

## Beschreibung

Die Erfindung betrifft ein Verfahren zur Herstellung von Getreideprodukten, wie zum Beispiel Gebäcke und Teigwaren.

Bei der Herstellung von Gebäck aus Getreide, wie zum Beispiel Weizen oder einer anderen Getreideart oder einem Gemisch verschiedener Getreidearten, werden üblicherweise zuerst die Getreidekörner zu Mehl verarbeitet. Je nach der herzustellenden Art des Gebäckes erfolgt die Ausmahlung mit einem anderen Ausmahlgrad. Das Ausmahlen wird meist, aber nicht immer, in einer für diese Arbeit spezialisierten Getreidemühle durchgeführt. So gibt es zum Beispiel Armeen, bei welchen die Bäcker Schlagmühlen oder andere Mühlen besitzen, damit sie nicht Mehl sondern Getreide, das sich bekanntlich wesentlich besser lagern und transportieren lässt, als Ausgangsprodukt zur Brot- bzw. Gebäckherstellung benutzen können. Auch bei den primitiven Völkern wird die Getreideernte nicht beim Müller sondern in der eigenen Küche zu Mehl verarbeitet.

Zur Gebäckherstellung wird das Mehl zusammen mit Wasser und Presshefe oder aktiver Trockenhefe sowie zusammen mit Salz und gegebenenfalls einem Backmittel zu einem Teig geknetet. Nach einer dem Teig angemessenen Garzeit wird der Teig in Portionen aufgeteilt und diese werden dann zu Gebäck, zum Beispiel zu Brot, gebacken.

Zur Herstellung von Teigwaren wird das Mehl zusammen mit Wasser und gegebenenfalls Öl und Eiern zu einem Teig geknetet, der nach einer angemessenen Ruhezeit bei Raumtemperatur ausgewallt und zu Nudeln, Farfalle und dergleichen verarbeitet wird.

Diese Art der Gebäck- bzw. Teigwarenherstellung weist den an sich bekannten Nachteil auf, dass das Getreide zuerst zu Mehl verarbeitet werden muss, das wesentlich empfindlicher ist als das Getreide, was beim Transport und bei der Lagerhaltung berücksichtigt werden muss.

Die vorliegende Erfindung betrifft nun ein Verfahren zur Herstellung eines Getreideproduktes, beispielsweise Gebäcks, bei welchem aus dem Getreide direkt der Teig hergestellt wird.

Dieses Verfahren ist dadurch gekennzeichnet, dass man die gereinigten Getreidekörner ohne vorausgehenden Mahlprozess in einem Kutter, auch Blitz genannt, zu Teig verarbeitet, wobei das Wasser vor oder während und allfällige Zusatzstoffe vor oder nach dem Kuttern der Getreidemasse beigegeben werden.

Falls mit dem erfindungsgemässen Verfahren Gebäck, zum Beispiel Brot, hergestellt wird, werden als Zusatzstoffe Hefe, Salz und Backmittel der Getreidemasse beigegeben. Nach dem Kuttern lässt man dann, wie üblich, den Teig garen, formt ihn zu Portionen und bäckt aus diesen, durch Hitzeeinwirkung, das Brot.

Bei der Teigwarenherstellung werden als Zusatzstoffe allenfalls Öl, Kräuter und/oder Eier der Getreidemasse beigegeben. Nach dem Kuttern lässt man dann, wie üblich, den Teig ruhen, formt ihn zu Portionen und dann zu den fertigen Teigwaren.

Erfindungsgemäss werden die Getreidekörner vor dem Kuttern in Wasser eingeweicht, und zwar während mehreren Stunden, oder es wird mit trockenem Ausgangsmaterial direkt im Teig unter Wasserzugabe gekuttert.

Ferner können die erfindungsgemäss eingesetzten Getreidekörner wahlweise mindestens teilweise geschält oder ungeschält sein, was schliesslich die Herstellung von weissem, halbweissem oder dunklem Gebäck bzw. weissen, halbweissen oder dunklen Teigwaren erlaubt.

Selbstverständlich erlaubt das erfindungsgemässe Verfahren sowohl die Herstellung aller bekannten Gebäckarten, so etwa die Herstellung von Normalbrot, Kleinbrot, Spezialbrot usw., als auch die Herstellung aller bekannten Teigwarenarten, wie Nudeln, Farfalle, Pappardelle, Maccheroni, Penne und Spaghetti.

Nachfolgend wird ein erfindungsgemässes Ausführungsbeispiel zur Gebäckherstellung im Detail beschrieben:

Zuerst wird das Getreide gereinigt, also entsteint sowie von anderen Fremdkörpern, wie z.B. Metallteilen, getrennt und entpelzt. Das zur Brot- bzw. Gebäckherstellung zu verwendende Getreide, bei dem es sich um Weizen oder ein Gemisch aus Weizen und anderen Getreidearten, wie z.B. Roggen, handeln kann, wird noch zusätzlich poliert. Dabei wird der Durchgang durch die Abreibungsmaschine so geregelt, dass man mit einem Durchgang 10 bis 30% Kleie und die anderen zur Brotherstellung nicht verwendbaren Bestandteile entfernen kann.

100 Gewichtsteile geschälten, teilgeschälten oder nicht geschälten Weizens werden dann in 65 - 75 Gewichtsteilen kalten Wassers, also Wasser von 5 - 15 °C, während 4 - 5 Stunden eingeweicht und in einem Kutter, auch Blitz genannt, während 2 - 3 Minuten zerkleinert. Als Kutter eignen sich zum Beispiel die Gewerbekutter der Firma Hoegger Alpina, CH-Gossau, welche dem Fachmann zum Beispiel unter der Bezeichnung Pb 990 bekannt sind und vorzugsweise als Fleischkutter eingesetzt werden. Es hat sich als zweckmässig erwiesen, einen Kutter zu verwenden, der zwei mit einer Tourenzahl von 5000 U/min rotierende 3-armige Messer besitzt, die ihrerseits eine Messerlänge von je etwa 19 cm aufweisen. Bei Verwendung eines Kutters mit anderen Abmessungen und anderer Messerzahl ist die Tourenzahl und allenfalls auch die Behandlungszeit entsprechend zu ändern. Um eine Erwärmung zu verhindern, das heisst um die Temperatur der Getreidemasse unterhalb von 30°C, vorteilhafterweise unterhalb von 25°C zu halten, wird der aus Körnern und Wasser bestehenden Masse Trockeneis zugegeben, und zwar ca. 1 kg auf 18 kg Masse, also etwa 10 Gewichtsteile auf die vorgenannten 165 - 170 Gewichtsteile der zu verarbeitenden Masse.

3 - 4 Gewichtsteile Salz, 3 - 7 Gewichtsteile Hefe und 1 - 4 Gewichtsteile Backmittel können vor oder bei Beginn des Kutterns beigegeben werden. Es ist aber auch möglich, den durch das Kuttern erzeugten Teig noch in einem Bäckereikneter während 2 - 3 Minuten zu kneten und die vorgenannten Zugaben bei Beginn des Knetens beizugeben.

Der so erhaltene Teig kann nun wie ein aus Mehl hergestellter Teig weiterbehandelt werden. Man kann gewünschtenfalls die Stockgare durchführen oder auf diesen Prozess verzichten. Dann wird man den Teig aufbereiten, also in Portionen aufteilen und die sogenannte Stückgare durchführen. Alsdann erfolgt das Backen im Ofen.

Mit dem gleichen Verfahren können auch Hebel bzw. Vorteige und Sauerteige hergestellt werden. In diesen Fällen sind jedoch 100 Teile Weizen, Roggen etc. und 100 Teile Wasser zu verwenden.

In die zu verarbeitende Masse kann 1 Teil Hefe, zum Beispiel Bioreal, oder 3 bis 7 Teile Sauerteigstarterkulturen, wie Bioreal levain, aktiv beigegeben und in bekannter Art und Weise in Gärung gebracht werden. Die so erhaltene Masse wird dann dem vorstehend genannten Teig zu 10 bis 30 Teilen zugegeben.

Eingehende Versuche haben ergeben, dass das so hergestellte Gebäck qualitativ hochstehender ist, als Gebäck, bei welchem die Getreidekörner zuerst zu Mehl verarbeitet worden sind. Einerseits ist das Brot im Geschmack besser und andererseits ist seine Haltbarkeit grösser. Dies hat seinen Grund darin, dass die bei der Mehlherstellung entstehenden Aroma-Verluste hier nicht auftreten. Wesentliche Vorteile dieses neuen Verfahrens liegen auch darin, dass nicht das an sich empfindliche Mehl, sondern die wesentlich unempfindlicheren Getreidekörner gelagert und transportiert werden müssen. Falls man, was heute sehr oft verlangt wird, die zum Ausbakken bereiten Halb-Fabrikate zuerst tiefgefrieren will, damit man sie irgendwann rasch fertigbacken kann, wird man die Masse nach dem Kuttern sofort aufarbeiten, das heisst in Portionen teilen, dann bei -40°C tiefkühlen, um sie nachher bei - 20°C zu lagern. Zum Gebrauch lässt man diese Halbfabrikate zuerst auftauen, dann garen und gibt sie anschliessend in den heissen Backofen, um sie zu backen. Auch die so hergestellten Gebäcke weisen eine höhere Qualität auf, als die aus Mehl hergestellten Gebäcke derselben Art.

Das erfindungsgemässe Verfahren lässt sich auf allen bisher bekannten Teigführungsverfahren anwenden. So zum Beispiel auf das Gärstopverfahrung und zur Herstellung von koagulierten Teigen und Tiefkühlteiglingen.

Falls mit dem erfindungsgemässen Verfahren Teigwaren herzustellen sind, wird geschältes, teilgeschältes oder nicht geschältes Getreide in kaltem Wasser eingeweicht, und es wird nach dieser Einweichzeit die Masse in einem Kutter während 2 - 3 Minuten zerkleinert. Eier, Öl und andere Zusätze können vor oder bei Beginn des Kutterns beigegeben werden. Es ist aber auch möglich, den durch das Kuttern erzeugten Teig noch in einem Bäckereikneter während 2 - 3 Minuten zu kneten und die vorgenannten Zugaben bei Beginn des Knetens beizugeben. Der so erhaltene Teig kann nun wie ein aus Mehl hergestellter Teig weiterbehandelt und in bekannter Art und Weise zur Teigwarenherstellung verwendet werden.

## Patentansprüche

1. Verfahren zur Herstellung von Getreideprodukten aus einer Getreideart oder einem Gemisch von verschiedenen Getreidearten, bei welchem man aus den gereinigten und feinst zerkleinerten Getreidekörnern mittels Wasser einen Teig macht, **dadurch gekennzeichnet, dass** man die gereinigten Getreidekörner ohne vorausgehenden Mahlprozess in einem Kutter zu Teig verarbeitet, wobei das Wasser vor oder während dem Kuttern der Getreidemasse beigegeben wird.

2. Verfahren nach Anspruch 1 zur Herstellung von Gebäck, wobei man aus den gereinigten und feinst zerkleinerten Getreidekörnern mittels Wasser und Hefe einen Teig macht, diesen gären lässt, ihn zu Portionen formt und aus diesen durch Hitzeeinwirkung das Gebäck bäckt, **dadurch gekennzeichnet, dass** die Hefe vor oder nach dem Kuttern der Getreidemasse beigegeben wird.

3. Verfahren nach Anspruch 2, **dadurch gekennzeichnet, dass** mit der Hefe auch Salz und Backmittel zugegeben werden.

4. Verfahren nach Anspruch 1 zur Herstellung von Teigwaren.

5. Verfahren nach einem der Ansprüche 1 bis 4, **dadurch gekennzeichnet, dass** man die Getreidekörner vor dem Kuttern mindestens teilweise schält.

6. Verfahren nach einem der Ansprüche 1 bis 4, **dadurch gekennzeichnet, dass** man ungeschälte Getreidekörner verwendet.

7. Verfahren nach einem der Ansprüche 1 bis 6, wobei das Wasser vor dem Kuttern der Getreidemasse beigegeben wird, **dadurch gekennzeichnet, dass** man die Getreidekörner während 3-5 Stunden in Wasser einweicht und die so gebildete Getreidemasse anschliessend in den Kutter abfüllt.

8. Verfahren nach Anspruch 7, **dadurch gekennzeichnet, dass** die Getreidekörner in Wasser von höchstens 15°C eingeweicht werden.

9. Verfahren nach einem der Ansprüche 1 bis 8, **dadurch gekennzeichnet, dass** bei einer Tourenzahl von ca. 5000 U/min 2 - 5 Minuten gekuttert wird, wozu man insbesondere einen Kutter einsetzt, der zwei 3-armige Messer mit einer Länge von je etwa 19 cm besitzt.

10. Verfahren nach einem der Ansprüche 1 bis 9, **dadurch gekennzeichnet, dass** man die zumindest aus Getreidekörner und Wasser gebildete Getreidemasse beim Kuttern durch Beigabe von Trockeneis so kühlt, dass ihre Endtemperatur unter 30°C liegt.
